# EUROPÄISCHE PATENTSCHRIFT

(11) **EP 0 612 771 B1**
(45) Veröffentlichungstag und Bekanntmachung des Hinweises auf die Patenterteilung: **31.07.1996**
(21) Anmeldenummer: 93120353.3
(22) Anmeldetag: 17.12.1993
(51) Int. Cl.: C08F 246/00, C08F 230/08, C09D 143/04

(54) **Wässrige Kunststoffdispersion zur Herstellung emissionsarmer Dispersionsfarben, Anstrichmittel und Kunststoffdispersionsputze**
Aqueous dispersion of synthetic materials for the preparation of low emulsions paints, coatings and latex-based plasters
Dispersions aqueuses de matériaux plastiques pour la préparation de peintures en dispersion, enduits et plâtres à base de dispersions à faible dégagement de matières volatiles

(30) Priorität: 16.02.1993 DE 4304569
(43) Veröffentlichungstag der Anmeldung: 31.08.1994
(73) Patentinhaber: HÜLS AKTIENGESELLSCHAFT, D-45764 Marl (DE)
(72) Erfinder: Hahn, Karl, Dr., D-45768 Marl (DE); Dören, Klaus, Dr., D-45772 Marl (DE)

(56) Entgegenhaltungen:
- EP-A- 0 327 006
- EP-A- 0 401 200

## Beschreibung

Der Gegenstand der Erfindung betrifft eine wäßrige Kunststoffdispersion zur Herstellung emissionsarmer Dispersionsfarben, Anstrichmittel und Kunststoffdispersionsputze entsprechend dem Oberbegriff von Patentanspruch 1. Eine derartige Kunststoffdispersion ist grundsätzlich aus der EP-OS 0 327 006 bekannt. Die Kunststoffdispersion zeigt in damit hergestellten Dispersionsfarben, Anstrichmitteln und Kunststoffdispersionsputzen ein unzureichendes Pigmentbindevermögen. Außerdem entspricht die Viskositätsstabilität der Dispersionsfarben, Anstrichmittel und Kunststoffdispersionsputze nicht immer den Anforderungen der Praxis.

Die Aufgabe der Erfindung besteht darin, die Mängel des Standes der Technik zu überwinden und eine wäßrige Kunststoffdispersion bereitzustellen, die in damit hergestellten Dispersionsfarben, Anstrichmitteln und Kunststoffdispersionsputzen ein gutes Pigmentbindevermögen aufweist. Außerdem sollen die Dispersionsfarben, Anstrichmittel und Kunststoffdispersionsputze eine gute Viskositätsstabilität aufweisen.

Die Aufgabe wurde wie in den Patentansprüchen angegeben gelöst.

Die Erfindung betrifft somit eine wäßrige Kunststoffdispersion zur Herstellung emissionsarmer Dispersionsfarben, Anstrichmittel und Kunststoffdispersionsputze mit den folgenden Merkmalen:
Die Dispersion weist eine Mindestfilmbildungstemperatur von < 10 °C auf;
die Kunststoffteilchen der Dispersion weisen Silanol- und/oder Alkoxysilanolgruppen auf;
die Dispersion ist erhalten durch Emulsionspolymerisation von radikalisch polymerisierbaren Monomeren in wäßriger Phase als Dispersionsmedium in Gegenwart eines Emulgators, eines freie Radikale bildenden Polymerisationsinitiators und üblicher Hilfsmittel;
bei der Polymerisation werden, bezogen auf die gesamten Monomeren, 30 bis 50 Massen-% eines hartmachenden Monomers, 47 bis 67 Massen-% eines weichmachenden Monomers und 0,1 bis 0,8 Massen-% eines Vinylsilans eingesetzt mit der Maßgabe, daß das hartmachende und das weichmachende Monomer dadurch charakterisiert sind, daß die damit jeweils herstellbaren Homopolymerisate eine Glastemperatur von > 50 bzw. < 20 °C aufweisen;
die Dispersion ist dadurch gekennzeichnet,
daß zusätzlich 0,2 bis 1,0 Massen-% (Meth)acrylamid und 1,0 bis 2,5 Massen-% Acrylsäure, 2,0 bis 4,0 Massen-% Methacrylsäure oder 1,0 bis 4,0 Massen-% Maleinsäure eingesetzt werden.

Das Vinylsilan ist vorzugsweise aus der Gruppe der Vinyltrialkoxysilane und Vinylalkyldialkoxysilane ausgewählt. Das hartmachende Monomer ist vorzugsweise aus der Gruppe Styrol, Methylmethacrylat und Vinylchlorid ausgewählt. Das weichmachende Monomer ist vorzugsweise aus der Gruppe 1,3-Butadien, Isopren, (Meth)acrylsäurealkylester, Maleinsäuredialkylester, Fumarsäuredialkylester, Vinylester und Alkene ausgewählt.

Die Polymerisation wird vorzugsweise hinsichtlich der Monomer- und der Initiatorzugabe semikontinuierlich durchgeführt. Dabei wird das Vinylsilan vorzugsweise während der gesamten Zulaufzeit der übrigen Monomeren zudosiert.

Die Polymerisation wird vorzugsweise in Gegenwart eines anionischen oder eines anionischen und eines nichtionischen Emulgators durchgeführt.

Die Erfindung wird durch die folgenden Beispiele erläutert. Darin bedeuten Prozent (%) Massen-% und Teile (T.) Massenteile. Die nicht erfindungsgemäßen Vergleichsbeispiele werden mit großen Buchstaben bezeichnet.

### Herstellung der wäßrigen Kunststoffdispersionen 1 bis 3 und A bis C

### Beispiel 1 (Dispersion 1, Tabelle 1)

In einem 12 l V4A-Druckreaktor wurde eine Lösung von 0,35 T. des Natriumsalzes eines sulfatierten, ethoxylierten Nonylphenols (Molverhältnis Ethylenoxid/Nonylphenol = 13 : 1), 0,01 T. Na₂S₂O₈ (Polymerisationsinitiator), 0,01 T. des Tetranatriumsalzes der Ethylendiamintetraessigsäure und 0,01 T. K₃PO₄ in 60. T. vollentsalztem Wasser vorgelegt und auf 80 °C aufgeheizt. Dann wurde mit der gleichmäßigen Zugabe einer Emulsion aus 37,7 T. Styrol, 60,0 T. n-Butylacrylat, 0,3 T. Vinyltriethoxysilan, 0,5 T. Acrylamid, 1,5 T. Acrylsäure, 1. T. des oben genannten Emulgators, 0,6 T. eines ethoxylierten C₁₂- bis C₁₆-Alkanols (Molverhältnis Ethylenoxid/C₁₂- bis C₁₆-Alkanol = 17 : 1), 0,04 T. K₃PO₄ und 20 T. vollentsalztem Wasser und der gleichmäßigen Zugabe einer Lösung von 0,4 T. Na₂S₂O₈ in 18 T. vollentsalztem Wasser begonnen, wobei die Temperatur durch Abführung der Polymerisationswärme konstant gehalten wurde. Der Zulauf der Emulsion war nach 6, der Zulauf der Initiatorlösung nach 7 Std. beendet. 2 Std. nach Beendigung des Zulaufs der Initiatorlösung wurde eine Lösung von 0,05 T. Na₂S₂O₈ in 2 T. vollentsalztem Wasser in einer Portion zugegeben. Die Polymerisation wurde nach insgesamt 12 Std. durch Abkühlung beendet. Die erhaltene Dispersion wurde mit Natronlauge auf pH 7,0 eingestellt, durch Filtration vom Koagulat abgetrennt, mit Wasserdampf von Restmonomeren und anderen flüchtigen Bestandteilen befreit und unter vermindertem Druck bis auf einen Feststoffgehalt von 50,9 Massen-% aufkonzentriert. Die Dispersion wurde wie in der folgenden Tabelle 2 angegeben charakterisiert.

### Beispiele 2 und 3 und A bis C

### (Dispersionen 2 und 3 und A bis C, Tabelle 1)

Es wurde wie im Beispiel 1 verfahren, jedoch wurden Art und Menge der Monomeren wie in Tabelle 1 angegeben geändert. Die Dispersion A war instabil, insbesondere gegenüber Elektrolyte. Sie wurde durch Zusatz von 2 Massen-% eines nicht ionischen Emulgators, bezogen auf die gesamten Monomeren, stabilisiert. Die Stabilität reichte dennoch nicht zur Herstellung einer Farbe. Die Dispersionen wurden wie in Tabelle 2 angegeben charakterisiert.

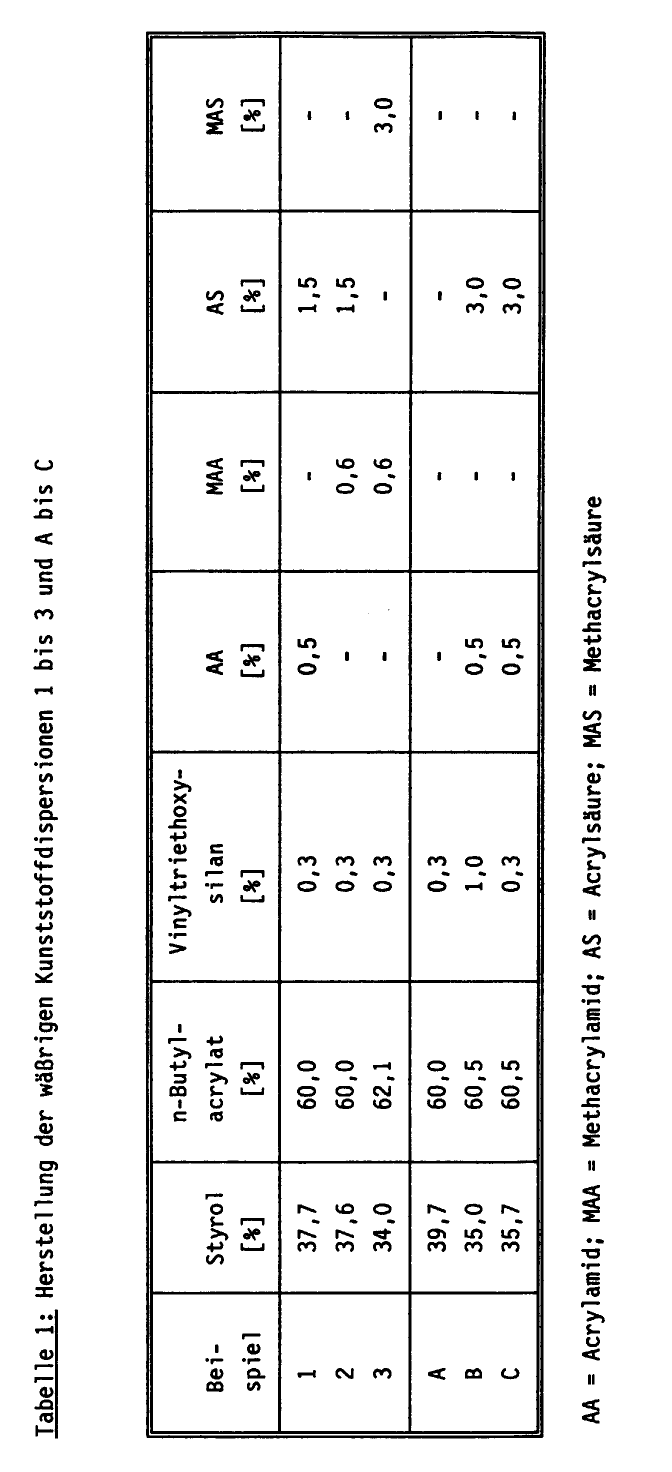

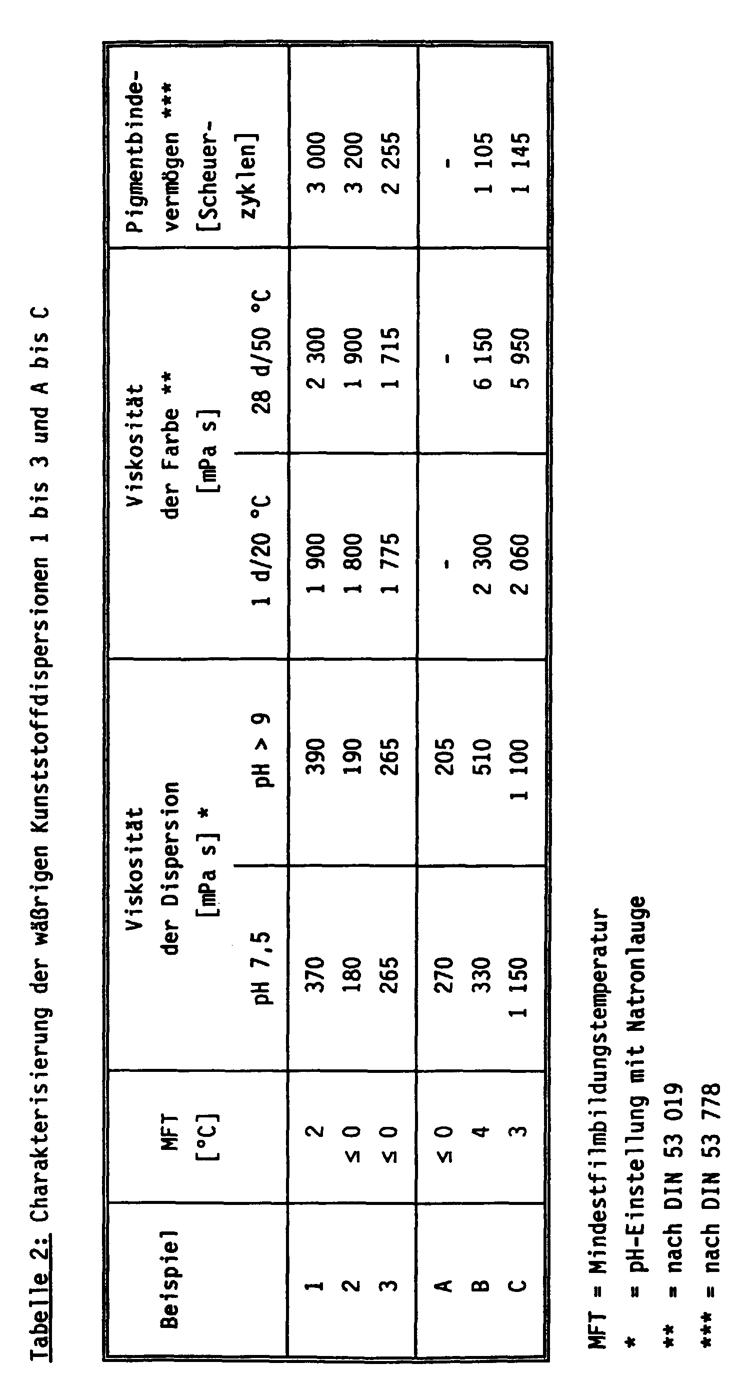

## Patentansprüche

1. Wäßrige Kunststoffdispersion zur Herstellung emissionsarmer Dispersionsfarben, Anstrichmittel und Kunststoffdispersionsputze mit den folgenden Merkmalen:
Die Dispersion weist eine Mindestfilmbildungstemperatur von < 10 °C auf;
die Kunststoffteilchen der Dispersion weisen Silanol- und/oder Alkoxysilanolgruppen auf;
die Dispersion ist erhalten durch Emulsionspolymerisation von radikalisch polymerisierbaren Monomeren in wäßriger Phase als Dispersionsmedium in Gegenwart eines Emulgators, eines freie Radikale bildenden Polymerisationsinitiators und üblicher Hilfsmittel;
bei der Polymerisation werden, bezogen auf die gesamten Monomeren, 30 bis 50 Massen-% eines hartmachenden Monomers, 47 bis 67 Massen-% eines weichmachenden Monomers und 0,1 bis 0,8 Massen-% eines Vinylsilans eingesetzt mit der Maßgabe, daß das hartmachende und das weichmachende Monomer dadurch charakterisiert sind, daß die damit jeweils herstellbaren Homopolymerisate eine Glastemperatur von > 50 bzw. < 20 °C aufweisen; die Dispersion ist dadurch gekennzeichnet,
daß zusätzlich 0,2 bis 1,0 Massen-% (Meth)acrylamid und 1,0 bis 2,5 Massen-% Acrylsäure, 2,0 bis 4,0 Massen-% Methacrylsäure oder 1,0 bis 4,0 Massen-% Maleinsäure eingesetzt werden.

2. Kunststoffdispersion nach Anspruch 1,
dadurch gekennzeichnet,
daß das Vinylsilan aus der Gruppe der Vinyltrialkoxysilane und Vinylalkyldialkoxysilane ausgewählt wird.

3. Kunststoffdispersion nach Anspruch 1 oder 2,
dadurch gekennzeichnet,
daß als hartmachendes Monomer Styrol, Methylmethacrylat und/oder Vinylchlorid und als weichmachendes Monomer 1,3-Butadien, Isopren, (Meth(Meth)acrylsäurealkylester, Maleinsäuredialkylester, Fumarsäuredialkylester, Vinylester und/oder Alkene eingesetzt werden.

4. Kunststoffdispersion nach einem der Ansprüche 1 bis 3,
dadurch gekennzeichnet,
daß die Polymerisation hinsichtlich der Monomer- und der Initiatorzugabe semikontinuierlich durchgeführt wird.

5. Kunststoffdispersion nach Anspruch 4,
dadurch gekennzeichnet,
daß das Vinylsilan während der gesamten Zulaufzeit der übrigen Monomeren zudosiert wird.

6. Kunststoffdispersion nach einem der Ansprüche 1 bis 5,
dadurch gekennzeichnet,
daß die Polymerisation in Gegenwart eines anionischen oder eines anionischen und eines nichtionischen Emulgators durchgeführt wird.

## Claims

1. Aqueous polymer dispersion for the production of low-emission emulsion paints, coatings and polymer emulsion renderings having the following features:
the dispersion has a minimum film-forming temperature of < 10°C;
the polymer particles in the dispersion contain silanol and/or alkoxysilanol groups;
the dispersion is obtained by emulsion polymerization of free-radical-polymerizable monomers in the aqueous phase as dispersion medium in the presence of an emulsifier, a free-radical-forming polymerization initiator and conventional auxiliaries;
relative to the total monomers, 30 to 50% by mass of a hardening monomer, 47 to 67% by mass of a plasticizing monomer and 0.1 to 0.8% by mass of a vinylsilane are used in the polymerization, with the proviso that the hardening monomer and the plasticizing monomer are characterized in that the homopolymers respectively produced therewith have a glass transition temperature of > 50 or < 20°C;
the dispersion is characterized in that, additionally, 0.2 to 1.0% by mass of (meth)acrylamide and 1.0 to 2.5% by mass of acrylic acid, 2.0 to 4.0% by mass of methacrylic acid or 1.0 to 4.0% by mass of maleic acid are used.

2. Polymer dispersion according to Claim 1, characterized in that the vinylsilane is selected from the group comprising the vinyltrialkoxysilanes and vinylalkyldialkoxysilanes.

3. Polymer dispersion according to Claim 1 or 2, characterized in that styrene, methyl methacrylate and/or vinyl chloride are used as hardening monomer and 1,3-butadiene, isoprene, alkyl (meth)acrylates, dialkyl maleates, dialkyl fumarates, vinyl esters and/or alkenes are used as plasticizing monomer.

4. Polymer dispersion according to one of Claims 1 to 3, characterized in that the polymerization is carried out semicontinuously with respect to the addition of monomer and initiator.

5. Polymer dispersion according to Claim 4, characterized in that the vinylsilane is metered in during the entire feed time of the other monomers.

6. Polymer dispersion according to one of Claims 1 to 5, characterized in that the polymerization is carried out in the presence of an anionic emulsifier or of an anionic and a nonionic emulsifier.

## Revendications

1. Dispersions aqueuses de matière plastique pour la préparation de couleurs en dispersion, à faible pouvoir polluant, pour peintures et pour crépis en dispersion de matières plastiques, ayant les caractéristiques suivantes :
- la dispersion possède une température de formation de pellicule minimale de < 10°C ;
- les particules de matières plastiques de la dispersion possèdent des groupes silanol et/ou alcoxysilanol ;
- la dispersion est obtenue par polymérisation en émulsion de monomères polymérisables par voie radicalaire, en phase aqueuse en tant que milieu de dispersion, en présence d'un agent émulsionnant, d'un promoteur de polymérisation qui forme des radicaux libres et d'agents auxiliaires usuels ;
- on met en oeuvre au cours de la polymérisation, rapporté à la totalité des monomères, 30 à 50 % en masse d'un monomère rendant dur, 47 à 67 % en masse d'un monomère plastifiant et de 0,1 à 0,8 % en masse d'un vinylsilane, sous réserve que le monomère rendant dur et le monomère plastifiant sont caractérisés en ce que les homopolymérisats que l'on peut produire ainsi, respectivement, possèdent une température vitreuse de > 50 ou < 20°C ;
- la dispersion est caractérisée en ce que l'on met en jeu en supplément 0,2 à 1,0 % en masse de (méth)acrylamide et de 1,0 à 2,5 en masse d'acide acrylique ; 2,0 à 4,0 % en masse d'acide méthacrylique ou 1,0 à 4,0 % en massé d'acide maléique.

2. Dispersion de matière plastique selon la revendication 1, caractérisée en ce que le vinylsilane est choisi dans le groupe des vinyltrialcoxysilanes et des vinylalcoyldialcoxysilanes.

3. Dispersion de matière plastique selon la revendication 1 ou la revendication 2, caractérisée en ce que comme monomère rendant dur on met en oeuvre le styrène, le méthacrylate de méthyle, et/ou le chlorure de vinyle et comme monomère plastifiant, le 1,3-butadiène, l'isoprène, les esters d'alcoyle d'acide (méth)acrylique, les esters de dialcoyle de l'acide maléique, les esters de dialcoyle d'acide fumarique, des esters de vinyle et/ou des alcènes.

4. Dispersion de matière plastique selon l'une des revendications 1 à 3, caractérisée en ce que la polymérisation est réalisée en ce qui concerne l'addition du monomère et du promoteur, d'une manière semi-continue.

5. Dispersion de matière plastique selon la revendication 4, caractérisée en ce que le vinylsilane est ajouté d'une manière dosée pendant la totalité du temps d'amenée des autres monomères.

6. Dispersion de matière plastique selon l'une des revendications 1 à 5, caractérisée en ce que la polymérisation s'effectue en présence d'un agent émulsionnant anionique ou d'un agent émulsionnant anionique et d'un agent émulsionnant non ionique.
